# EUROPEAN PATENT SPECIFICATION

(11) **EP 2 508 579 B1**
(45) Date of publication and mention of the grant of the patent: **19.04.2017**
(21) Application number: 12160512.5
(22) Date of filing: 21.03.2012
(51) Int. Cl.: C09D 183/04, C09D 183/14, C09D 133/04, C09D 143/04

(54) **Weather-Resistant Hard Coating Composition and Coated Article**
Wetterfeste Hartbeschichtungszusammensetzung und beschichteter Artikel
Composition de revêtement dur résistant aux intempéries et article revêtu

(30) Priority: 07.04.2011 JP 2011085068
(43) Date of publication of application: 10.10.2012
(73) Proprietor: Shin-Etsu Chemical Co., Ltd., Chiyoda-ku Tokyo (JP)
(72) Inventor: Higuchi, Koichi, Annaka-shi, Gunma (JP)
(74) Representative: Stoner, Gerard Patrick

(56) References cited:
- EP-A1- 2 239 308
- EP-A2- 1 990 386

## Description

### TECHNICAL FIELD

The present invention relates to a composition for weather-resistant hard coating to be used for direct coating on at least one surface of an organic resin substrate, the composition being composed of (1) a specific silicone resin, (2) a specific vinyl copolymer, (3) a curing catalyst, and (4) a solvent. The present invention relates also to a coated article with hard coating which is made up of an organic resin substrate and a layer of hard coating formed thereon from the composition by curing.

### BACKGROUND

There has recently been a general tendency toward the replacement of clear sheet glass with a transparent material which is unbreakable or harder to break than sheet glass. Typical examples of such substitutes are plastics, especially polycarbonate resin, which currently finds various uses as construction members such as window panes for buildings and vehicles and instrument covering in place of glass on account of its outstanding clarity, impact resistance, and heat resistance.

Unfortunately, the polycarbonate resin is inferior to glass in surface properties, such as scratch resistance and weather resistance, and this has aroused a demand for improvement of its molded articles in surface properties.
The recent requirement for polycarbonate resin used as window panes and road sound barriers is durability at least ten years in outdoor exposure.

There have been proposed several means for improving the weather resistance of molded products of polycarbonate resin; one of them is by lamination with a highly weather-resistant acrylic resin film on the surface of polycarbonate resin substrate, and the other is by coextrusion to form a resin layer containing a UV absorber on the surface of polycarbonate resin substrate.

One way proposed so far to improve the scratch resistance of molded products of polycarbonate resin is by coating with a thermosetting resin such as polyorganosiloxane and melamine, or by coating with a photocurable resin such as polyfunctional acrylic resin.

On the other hand, there is known a transparent body having both weather resistance and scratch resistance, which is produced by the process disclosed in JP-A S56-92059 and JP-A H01-149878. It is an ultraviolet-absorbing clear board coated with a protective film of polysiloxane coating layer containing colloidal silica, with an undercoating layer interposed thereunder which is incorporated with a large amount of ultraviolet-absorbing agent.

The foregoing product, however, suffers the disadvantage resulting from incorporation of a large amount ultraviolet-absorbing agent into the undercoating layer. In other words, the ultraviolet-absorbing agent makes the undercoating layer poor in adhesion to the substrate thereunder and the protective film thereon of polysiloxane coating material containing colloidal silica. Moreover, it vaporizes during heating and curing and disappears from the compound, and it gradually bleeds out during outdoor use for a long period of time, resulting in cracking and whitening or yellowing. Another disadvantage is that the protective coating film layer of polysiloxane containing colloidal silica cannot accept a large amount of ultraviolet-absorbing agent if it is to have good scratch resistance.

There is also known a protective film to be applied to a plastics substrate, as disclosed in JP-A H08-151415. This protective film is formed from a mixture composed of two vinyl monomers copolymerizable with each other, one of them containing a benzotriazole- or benzophenone-based ultraviolet-absorbing agent. Unfortunately, this protective film is limited in scratch resistance because it is formed from a vinyl polymer.

There is also known a multilayered plastics article which has good adhesion to the plastics substrate as well as good weather resistance. It is formed from a coating compound composed of a vinyl monomer containing a benzotriazole- or benzophenone-based ultraviolet-absorbing agent, a vinyl monomer containing alkoxysilyl groups, and a vinyl monomer copolymerizable therewith. See JP-A 2001-114841, JP-A-2010-261012 (EP2239308), JP-B-3102696, JP-A 2001-214122, JP-A 2001-47574, JP-A 2008-120986, and JP-A 2008-274177 (EP1990386).

The foregoing copolymer-based coating material is made into an undercoating layer on which is formed a coating film of polysiloxane resin containing colloidal silica, so that there is obtained a coated article having scratch resistance and weather resistance. The thus obtained coated article has improved adhesion to the polysiloxane resin coating film and weather resistance. However, the coated article is subject to cracking and peeling and unsatisfactory in long-term weather resistance because the undercoating layer contains alkoxysilyl groups which do not form the crosslinked network completely, leaving uncured alkoxysilyl groups or hydroxysilyl groups liable to post-crosslink with time and to occur deformation. Moreover, the post-crosslinking results in cracking when the coating film undergoes an abrupt temperature change, especially one at comparatively high temperatures.

For example EP2239308A describes a UV-shielding coating composition comprising (A) a dispersion of composite zinc oxide nanoparticles; (B) a vinyl copolymer obtained from copolymerisation of alkoxysilyl vinyl monomer, a UV-absorbing vinyl monomer, another monomer, and (C) solvent. They are disclosed mainly for use as primers. They may contain (D) colloidal silica; (E) organopolysiloxane of M_{w} ≥ 1000 which may be a hydrolytic condensates of one or more silanes.

There is another way of improving adhesion and crack resistance, by controlling the difference in linear expansion coefficient between the substrate and the acrylic resin layer as a primer layer and between the primer layer and the polysiloxane curing layer. See JP-A 2004-1393. The disadvantage of this idea is that the primer layer cannot be incorporated with a large amount of ultraviolet-absorbing agent and hence is unsatisfactory in long-term weather resistance.

The above-mentioned article made up of an organic resin substrate and a laminate layer formed thereon which is composed of an undercoating film and a polysiloxane hard top coating film, needs manufacturing steps to apply at least two coating compounds. The necessity for such complicated materials and processes poses problems. Simpler materials and processes would be desirable.

### THE INVENTION

The aim herein is to provide new and useful hard coating compositions, articles coated with the hard coating and methods for their preparation. Preferred attributes include forming a coating film good or excellent in weather resistance, good in scratch resistance, free from defects such as cracking, peeling, and yellowing over a long period of time, and having direct applicability as a single layer.

The present inventors found that covering on the surface of an organic resin substrate with a hard coating film of a compound for hard coating composed of (1) a specific silicone resin component and (2) a vinyl copolymer component having organic ultraviolet-absorbing groups and reactive groups in the side chains can replace the conventional system that needs at least two layers (an undercoating layer and a hard coating layer) on the organic resin substrate, especially the substrate of polycarbonate moldings with a new simple system that merely needs at least one weather-resistant hard coating layer on the substrate of polycarbonate moldings. The weather-resistant hard coating layer is formed from a compound for weather-resistant hard coating composed of (1) a specific silicone resin component and (2) a vinyl copolymer component having specific organic ultraviolet-absorbing groups and reactive groups in the side chains. It has good abrasion resistance presumably due to the silicone resin as component (1), good adhesion to the substrate due to the vinyl copolymer as component (2), and outstanding weather resistance due to the organic ultraviolet-absorbing groups in the vinyl copolymer as component (2).

The coating film formed from the compound for weather-resistant hard coating composed of (1) a specific silicone resin component and (2) a vinyl copolymer which has organic ultraviolet-absorbing groups and reactive groups bonding to the side chain exhibits good scratch resistance owing to the siloxane crosslinking reaction between silanol groups in the silicone resin as component (1) and/or the crosslinking reaction between the silanol group and the reactive group in the vinyl copolymer as component (2). Moreover, the coating film exhibits greatly improved weather resistance over so long a period of time because the vinyl copolymer as component (2) has organic ultraviolet-absorbing groups bonding to the side chain and undergoes crosslinking in the coating film of the compound, so that the ultraviolet-absorbing groups become immobilized in the coating film and hardly migrate to the surface of the coating film, which prevents whitening of appearance and decrease in adhesion and contributes to prolonged UV-absorbing effect without the UV-absorbing groups leaching away into water solvents and evaporating from the coating film during heat-curing treatment at high temperatures.

The present invention provides a hard coating composition as a protective film having weather resistance and scratch resistance and also provides an article coated with a cured product of the composition.
[1] A weather-resistant hard coating composition as defined in claim 1, to be used for direct coating on at least one surface of an organic resin substrate, said composition comprising the following components:
   (1) a silicone resin resulting from (co)hydrolysis and condensation of at least one selected from those alkoxysilanes represented by the following formulas (1-1), (1-2), and (1-3) or condensates of their partial hydrolyzates, provided that the ratio (1-1)/[(1-2)+(1-3)], in terms of mol% of silicon, is from 50/50 to 0/100:

      (R¹)ₘ(R²)ₙSi(OR³)₄₋ₘ₋ₙ (1-1)

      wherein R¹ and R² are independently a hydrogen atom or an unsubstituted or substituted monovalent hydrocarbon group, in which the substituent groups may be connected each other, R³ is an alkyl group having 1 to 3 carbon atoms, and m and n are independently 0 or 1, with m+n being 0, 1, or 2,

      (R⁴O)₃₋ₚ(R⁶)ₚSi-R⁸-Si(R⁷)_{q}(OR⁵)_{3-q} (1-2)

      wherein R⁴ and R⁵ are independently an alkyl group having 1 to 3 carbon atoms, R⁶ and R⁷ are independently a hydrogen atom or an unsubstituted or substituted monovalent hydrocarbon group, R⁸ is an oxygen atom, phenylene group, or an unsubstituted or substituted alkylene group having 2 to 10 carbon atoms, and p and q are independently 0 or 1,

      X-[(R¹⁵)Si(R¹⁶)_{y}(OR¹⁷)_{3-y}]_{z} (1-3)

      wherein X is a 1,3,5-trimethylcyclotrisiloxane residue, 1,3,5,7-tetramethylcyclotetrasiloxane residue, or isocyanurate residue, R¹⁵ is an alkylene group having 1 to 3 carbon atoms, R¹⁶ is a hydrogen atom or an unsubstituted or substituted monovalent hydrocarbon group, R¹⁷ is an alkyl group having 1 to 3 carbon atoms, y is 0 or 1, and z is 3 or 4;
   (2) a vinyl copolymer having in its side chain an organic ultraviolet-absorbing group and a reactive group selected from an alkoxysilyl group, hydroxyl group, epoxy group, carboxylic acid group, and amino group;
   (3) a curing catalyst; and
   (4) a solvent;
   wherein the silicone resin as component (1) and the vinyl copolymer as component (2) are present in such amounts in terms of solids that the ratio of (1)/(2) is from 10/90 to 50/50 by weight.
[2] The composition as defined in [1], wherein the ratio of (1-1)/[1-2)+(1-3)] is from 30/70 to 0/100 in terms of mol% of silicon.
[3] The composition as defined in [1] or [2], wherein the formula (1-1) is specified such that R¹ is a methyl group or a monovalent hydrocarbon group substituted with an ultraviolet-absorbing group, m = 1, n = 0, and R³ is a methyl group; the formula (1-2) is specified such that R⁸ is an unsubstituted or substituted alkylene group having 2 to 8 carbon atoms, p and q each are 0, R⁴ and R⁵ each are a methyl group; and the formula (1-3) is specified such that X is an isocyanurate residue, y = 0, R¹⁷ is a methyl group, and z = 3.
[4] The composition as defined in any one of [1] to [3], wherein the silicone resin as component (1) is obtained by hydrolysis and condensation from at least one selected from the group consisting of the alkoxysilanes represented by the formulas (1-2) and (1-3) and the condensates of partial hydrolyzates thereof.
[5] The composition as defined in any one of [1] to [3], wherein the silicone resin as component (1) is obtained by hydrolysis and condensation of at least one selected from the group consisting of the alkoxysilanes represented by the formula (1-3) and the condensates of partial hydrolyzes thereof.
[6] The composition as defined in any one of [1] to [5], wherein the component (2) is a copolymer obtained by copolymerization from the following monomer components (2-1) to (2-3):
   (2-1) a vinyl monomer having an organic ultraviolet-absorbing group: 5 to 50 % by weight;
   (2-2) a reactive group-containing vinyl monomer which contains at least one selected from the group consisting of alkoxysilyl group, hydroxyl group, and epoxy group: 2 to 30 % by weight; and
   (2-3) other monomer copolymerizable with said monomers: 20 to 93 % by weight.
[7] The composition as defined in [6], wherein the component (2-2) is a hydroxyl group-containing vinyl monomer.
[8] The composition as defined in any one of [1] to [7], which further comprises water as component (5).
[9] The composition as defined in any one of [1] to [8], which further comprises inorganic oxide fine particles as component (6).
[10] The composition as defined in [9], wherein the component (6) is at least one selected from the group consisting of silica, zinc oxide, titanium oxide, and cerium oxide.
[11] The composition as defined in any one of [1] to [10], which further comprises any organic ultraviolet-absorbing agent and/or organic ultraviolet light stabilizer other than the component (2).
[12] A coated article according to claim 12 comprising an organic resin substrate and a hard coating film formed directly on at least one surface thereof from the weather-resistant hard coating composition as defined in any one of [1] to [11], said coated article having the property that it passes the adhesion test in a ratio of at least 97% and it gives a ΔHz (delta haze) value less than 15% in the Taber abrasion test.
[13] The coated article as defined in [12], in which the organic resin substrate is a molded one formed from polycarbonate resin.
[14] Methods of preparation of any of the above, as set out in claims 14 and 15.

### ADVANTAGEOUS EFFECTS

We find that the present compositions give ultraviolet-absorbing protective films which excel in water resistance, solvent resistance and light resistance. They can contain therein a large amount of organic ultraviolet-absorbing substance for improved light resistance, which becomes immobilized due to siloxane crosslinking without being lost over a long time. Crosslinking between the vinyl copolymer and the silicone resin can form an organic-inorganic complex which functions as a weather resistant binder with a low linear expansion coefficient. Upon application by coating and ensuing curing to an article poor in weather resistance, the composition for weather-resistance hard coating protects the article against discoloration and deterioration and imparts good weather resistance to the article.

The composition according to the present invention will find use as a coating material for organic resin articles, especially those of polycarbonate resin. The resulting coated articles excel in not only clarity and weather resistance but also scratch resistance and chemical resistance, and hence they will be suitable for outdoor use as vehicle and aircraft window panes and wind shields, building window panes, and road sound barriers.

In addition, the composition according to the present invention permits production of coated articles by a simpler process than before.

### FURTHER EXPLANATIONS; OPTIONS AND PREFERENCES

The composition for weather-resistant hard coating according to the present invention is composed of (1) a specific silicone resin, (2) a vinyl copolymer with side chains having organic ultraviolet-absorbing groups and reactive groups connected thereto, (3) a curing catalyst, and (4) a solvent, as essential components.

### Silicone resin as component (1)

The composition according to the present invention contains a specific silicone resin as the component (1). This component is obtained by (co)hydrolysis and condensation from at least one selected from alkoxysilanes represented by the formulas (1-1), (1-2), and (1-3) below and the condensates of partial hydrolyzates thereof.

(R¹)ₘ(R²)ₙSi(OR³)₄₋ₘ₋ₙ (1-1)

wherein R¹ and R² are independently a hydrogen atom or an unsubstituted or substituted monovalent hydrocarbon group, in which the substituent groups may be connected each other, R³ is an alkyl group having 1 to 3 carbon atoms, and m and n are independently 0 or 1, with m+n being 0, 1, or 2.

(R⁴O)₃₋ₚ(R⁶)ₚSi-R⁸-Si(R⁷)_{q}(OR⁵)_{3-q} (1-2)

wherein R⁴ and R⁵ are independently an alkyl group having 1 to 3 carbon atoms, R⁶ and R⁷ are independently a hydrogen atom or an unsubstituted or substituted monovalent hydrocarbon group, R⁸ is an oxygen atom, phenylene group, or an unsubstituted or substituted alkylene group having 2 to 10 carbon atoms, and p and q are independently 0 or 1.

X-[(R¹⁵)Si(R¹⁶)_{y}(OR¹⁷)_{3-y}]_{z} (1-3)

wherein X is a 1,3,5-trimethylcyclotrisiloxane residue, 1,3,5,7-tetramethylcyclotetrasiloxane residue, or isocyanurate residue, R¹⁵ is an alkylene group having 1 to 3 carbon atoms, R¹⁶ is a hydrogen atom or an unsubstituted or substituted monovalent hydrocarbon group, R¹⁷ is an alkyl group having 1 to 3 carbon atoms, y is 0 or 1, and z is 3 or 4.

In the formula (1-1), R¹ and R² each are a hydrogen atom or an unsubstituted or substituted monovalent hydrocarbon group, preferably one having 1 to 30 carbon atoms, particularly 1 to 20 carbon atoms. Examples of R¹ and R² include hydrogen atoms; alkyl groups such as methyl group, ethyl group, propyl group, butyl group, pentyl group, hexyl group, heptyl group, and octyl group; cycloalkyl groups such as cyclopentyl group and cyclohexyl group; alkenyl groups such as vinyl group and allyl group; aryl groups such as phenyl group; halogenated hydrocarbon groups such as chloromethyl group, γ-chloropropyl group, and 3,3',3"-trifluoropropyl group; and other groups such as γ-methacryloxypropyl group, γ-glycidoxypropyl group, 3,4-epoxycyclohexylethyl group, γ-mercaptopropyl group, γ-aminopropyl group, γ-isocyanatepropyl group, hydroxybenzophenoneoxypropyl group, (meth)acryloxy group, epoxy group, mercapto group, amino group, isocyanate group, and hydrocarbon group substituted with an ultraviolet-absorbing group. UV-absorbing groups are well known: as seen in the proposals below for such groups in component (2). Additional examples of R¹ and R² include those groups with substituents joining together, which are exemplified by isocyanurate groups in which isocyanate-substituted hydrocarbon groups join together. Among these examples, alkyl groups and hydrocarbon groups substituted with an ultraviolet-absorbing group are desirable particularly for applications that need scratch resistance and weather resistance, and epoxy group, (meth)acryloxy group, and isocyanurate-substituted hydrocarbon group are desirable for applications that need toughness and dyeability.

In the formula (1), R³ is an alkyl group having 1 to 3 carbon atoms, such as methyl group, ethyl group, n-propyl group, and i-propyl group. Of these examples, methyl group and ethyl group are preferable, especially methyl group is preferable, from the standpoint of their high reactivity for hydrolysis and condensation and their reaction product (R³OH alcohol) which can be easily distilled off on account of its high vapor pressure.

Examples of the compound represented by the formula (1-1) above in which m = 0 and n = 0 include tetraalkoxysilane represented by the formula of Si(OR³)₄ or the condensate of partial hydrolyzate thereof. Specific examples of such tetraalkoxysilane or the condensate of partial hydrolyzate thereof include: tetramethoxysilane, tetraethoxysilane, tetraisopropoxysilane, tetrabutoxysilane, condensate of partial hydrolyzate of tetramethoxysilane ("M silicate 51" from Tama Chemicals Co., Ltd.; "MSI 51" from Colcoat Co., Ltd.; and "MS 51" and "MS 56" from Mitsubishi Chemical Corporation), condensate of partial hydrolyzate of tetraethoxysilane ("Silicate 35" and "Silicate 45" from Tama Chemicals Co., Ltd. and "ESI 40" and "ESI 48" from Colcoat Co., Ltd.), and cocondensate of partial hydrolyzates of tetramethoxysilane and tetraethoxysilane ("FR-3" from Tama Chemicals Co., Ltd. and "EMSi 48" from Colcoat Co., Ltd.).

Examples of the compound represented by the formula (1-1) above in which m = 1 and n = 0, or m = 0 and n = 1, include trialkoxysilane represented by the formula of R¹Si(OR³)₃ or R²Si(OR³)₃ or the condensate of partial hydrolyzate thereof. Specific examples of such trialkoxysilane or the condensate of partial hydrolyzate thereof include: hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatepropyltrimethoxysilane, γ-isocyanatepropyltriethoxysilane, hydroxybenzophenoneoxypropyltrimethoxysilane, condensate of partial hydrolyzate of methyltrimethoxysilane ("KC-89S" and "X-40-9220" from Shin-Etsu Chemical Co., Ltd.), and condensate of partial hydrolyzate of methyltrimethoxysilane and γ-glycidoxypropyltrimethoxysilane ("X-41-1056" from Shin-Etsu Chemical Co., Ltd.).

Examples of the compound represented by the formula (1-1) above in which m = 1 and n = 1 include dialkoxysilane represented by the formula of (R¹)(R²)Si(OR³)₂ or the condensate of partial hydrolyzate thereof. Specific examples of such dialkoxysilane or the condensate of partial hydrolyzate thereof include: methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, N-(2-aminoethyl)aminopropylmethyldimethoxysilane, hydroxybenzophenoneoxypropylmethyldimethoxysilane, and condensate of partial hydrolyzate thereof.

Preferable among those compounds represented by the formula (1-1) are methyltrimethoxysilane, condensate of partial hydrolyzate thereof ("KC-89S" and "X-40-9220" from Shin-Etsu Chemical Co., Ltd.), and hydroxybenzophenoneoxypropyltrimethoxysilane.

Examples of the second alkoxysilane or condensate of partial hydrolyzate thereof include those compounds represented by the formula (1-2) below.

(R⁴O)₃₋ₚ(R⁶)ₚSi-R⁸-Si(R⁷)_{q}(OR⁵)_{3-q} (1-2)

wherein R⁴ and R⁵ are independently an alkyl group having 1 to 3 carbon atoms; R⁶ and R⁷ are independently a hydrogen atom or an unsubstituted or substituted monovalent hydrocarbon group; R⁸ is an oxygen atom, phenylene group, or unsubstituted or substituted alkylene group having 2 to 10 carbon atoms; and p and q are independently 0 or 1.

In the formula (1-2), R⁴ and R⁵ are independently an alkyl group having 1 to 3 carbon atoms, such as methyl group, ethyl group, n-propyl group, and i-propyl group. Of these examples, methyl group and ethyl group are preferable, especially methyl group is preferable, from the standpoint of their high reactivity for hydrolysis and condensation and their reaction product (R³OH alcohol) which can be easily distilled off on account of its high vapor pressure.

In the formula (1-2), R⁶ and R⁷ each are a hydrogen atom or an unsubstituted or substituted monovalent hydrocarbon group, preferably one having 1 to 12 carbon atoms, particularly 1 to 8 carbon atoms. Examples of R⁶ and R⁷ include hydrogen atoms; alkyl groups such as methyl group, ethyl group, propyl group, butyl group, pentyl group, hexyl group, heptyl group, and octyl group; cycloalkyl groups such as cyclopentyl group and cyclohexyl group; alkenyl groups such as vinyl group and allyl group; aryl groups such as phenyl group; halogenated hydrocarbon groups such as chloromethyl group, γ-chloropropyl group, and 3,3',3"-trifluoropropyl group; and other groups such as γ-methacryloxypropyl group, γ-glycidoxypropyl group, 3,4-epoxycyclohexylethyl group, γ-mercaptopropyl group, γ-aminopropyl group, γ-isocyanatepropyl group, (meth)acyloxy group, epoxy group, mercapto group, amino group, and hydrocarbon group substituted with isocyanate group. Among these examples, alkyl groups, especially methyl group, are desirable particularly for applications that need scratch resistance and weather resistance.

In the formula (1-2), R⁸ is an oxygen atom, phenylene group, or an unsubstituted or substituted monovalent alkylene group having 2 to 10 carbon atoms. Preferable among divalent alkylene groups are unsubstituted or halogenated alkylene groups having 2 to 10 carbon atoms as exemplified below: ethylene group, 1,3-propylene group, 1,4-butylene group, 1,6-hexylene group, 1,8-octylene group, 3,3,4,4,5,5,6,6-octafluoro-1,8-octylene group, 1,10-decylene group, and 3,3,4,4,5,5,6,6,7,7,8,8-dodecafluoro-1,10-decylene. Of these examples, those unsubstituted or halogenated alkylene groups having 2 to 10 carbon atoms listed below are preferable for applications that need scratch resistance and weather resistance: ethylene group, 1,6-hexylene group, 3,3,4,4,5,5,6,6-octafluoro-1,8-octylene group, 1,10-decylene group, and 3,3,4,4,5,5,6,6,7,7,8,8-dodecafluoro-1,10-decylene group.

Examples of the compound represented by the formula (1-2) above include bisalkoxysilane or the condensate of partial hydrolyzate thereof. Specific examples of such bisalkoxysilane or the condensate of partial hydrolyzate thereof include: 1,2-ethylenebis(trimethoxysilane), 1,2-ethylenebis(methyldimethoxysilane), 1,6-hexylenebis(trimethoxysilane), 1,6-hexylenebis(methyldimethoxysilane), 3,3,4,4,5,5,6,6-octafluoro-1,8-octylenebis(trimethoxysilane), and 3,3,4,4,5,5,6,6-octafluoro-1,8-octylenebis-(methyldimethoxysilane).

The third alkoxysilane or the condensate of partial hydrolyzate thereof is exemplified by those represented by the formula (1-3) below.

X-[(R¹⁵)Si(R¹⁶)_{y}(OR¹⁷)_{3-y}]_{z} (1-3)

wherein X is a 1,3,5-trimethylcyclotrisiloxane residue, 1,3,5,7-tetramethylcyclotetrasiloxane residue, or isocyanurate residue; R¹⁵ is an alkylene group having 1 to 3 carbon atoms; R¹⁶ is a hydrogen atom or an unsubstituted or substituted monovalent hydrocarbon group; R¹⁷ is an alkyl group having 1 to 3 carbon atoms; y is 0 or 1; and z is 3 or 4.

In the formula (1-3), X is a 1,3,5-trimethylcyclotrisiloxane residue (represented by the formula (i) below), 1,3,5,7-tetramethylcyclotetrasiloxane residue (represented by the formula (ii) below), or isocyanurate residue (represented by the formula (iii) below), with the last one being preferable. 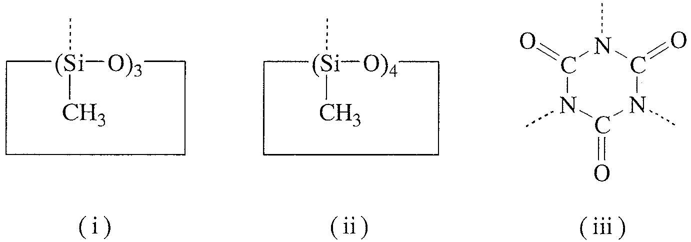 wherein the chain line denotes the bonding hand.

In the formula (1-3), R¹⁵ is an alkylene group having 1 to 3 carbon atoms, such as methylene group, ethylene group, 1,2-propylene group, and 1,3-propylene group, with the last one being preferable.

R¹⁶ is the same groups as R⁶ and R⁷ in the formula (1-2).

Likewise, R¹⁷ is the same groups as R⁴ and R⁵ in the formula (1-2).

Examples of the compound represented by the formula (1-3) include:
1,3,5-trimethyl-1,3,5-tris(3-trimethoxysilylpropyl)-cyclotrisiloxane,
1,3,5-trimethyl-1,3,5-tris(3-triethoxysilylpropyl)-cyclotrisiloxane,
1,3,5,7-tetramethyl-1,3,5,7-tetrakis(3-trimethoxysilylpropyl)cyclotetrasiloxane,
1,3,5,7-tetramethyl-1,3,5,7-tetrakis(3-triethoxysilylpropyl)-cyclotetrasiloxane,
tris(3-trimethoxysilylpropyl)isocyanurate, and tris(3-triethoxysilylpropyl)isocyanurate.

Preferable among those compounds represented by the formulas (1-1) to (1-3) are the one represented by the formula (1-1) in which R¹ is a methyl group or a monovalent hydrocarbon group substituted with an ultraviolet-absorbing group, m = 1 and n = 0, and R³ is a methyl group, the one represented by the formula (1-2) in which R⁸ is an unsubstituted or substituted alkylene group having 2 to 8 carbon atoms, p and q = 0, R⁴ and R⁵ each are a methyl group, and the one represented by the formula (1-3) in which X is an isocyanurate residue, y = 0, R¹⁷ is a methyl group, and z = 3. Thus, to the extent that each of (1-1) to (1-3) is used it may comprise or consist of one or more such preferred compounds.

The silicone resin as the component (1) may be prepared from the components (1-1) to (1-3) mentioned above in any ratio. For improved weather resistance and scratch resistance, it is formed from them in such
amounts that the ratio of (1-1)/[(1-2)+(1-3)] ranges from 50/50 to 0/100, more preferably 30/70 to 0/100 (in terms of the molar ratio of Si). If the total amount of the components (1-2) and (1-3) is less than 50 Si mol%, the resulting hard coating may not be sufficiently hard on account of the low crosslink density.

Incidentally, the Si mol% implies the ratio in the total amount of Si (in mol). One mol equals the molecular weight in the case of a monomer or the average molecular weight divided by 2 in the case of a dimer.

The silicone resin as the component (1) may be prepared from the components (1-1) to (1-3) mentioned above by (co)hydrolysis and condensation in any known way. A typical method includes (co)hydrolyzing alkoxysilane or the condensate of partial hydrolyzate thereof of the components (1-1), (1-2), and (1-3) separately or together in water at pH 1 to 7.5, preferably pH 2 to 7. The water may contain metal oxide fine particles such as silica sol suspended therein.

In addition, the water may contain one of the following compounds as a pH adjustor or an acid catalyst to promote hydrolysis. Examples include organic or inorganic acids such as hydrofluoric acid, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid; cation exchange resin coated with carboxylic acid group or sulfonic acid group; and metal oxide fine particles, such as silica sol, dispersible in acid water. Hydrolysis may be carried out in the presence of inorganic oxide fine particles such as silica sol, dispersed in water or organic solvent.

The hydrolysis should be carried out with water in an amount of 20 to 3,000 parts by weight for the total amount (100 parts by weight) of the components (1-1), (1-2), and (1-3) as alkoxysilane and/or condensate of partial hydrolyzate thereof. An excessive amount of water hinders efficient operation and makes the final composition poor in coatability and dryability due to the remaining water. Moreover, for improved storage stability, scratch resistance, and crack resistance, the amount of water should be at least 50 parts by weight and up to 150 parts by weight. With an excessively small amount of water, the resulting silicone resin will not have a sufficiently large weight average molecular weight e.g. in the suitable range specified later. Molecular weight is determined by gel permeation chromatography (GPC), referred to polystyrene standards. With an excessively large amount of water, the resulting silicone resin will not have a weight average molecular weight sufficient for the hard coating to have crack resistance as desired.

The hydrolysis may be accomplished by adding water to alkoxysilane or condensate of partial hydrolyzate thereof dropwise or all at once, and vice versa. The water for hydrolysis may contain an organic solvent, although the use of the organic solvent is not so recommended. Organic solvent-containing water tends to give rise to a silicone resin having a small weight average molecular weight in terms of polystyrene determined by GPC.

The hydrolysis is directly followed by condensation to give the silicone resin as the component (1). Condensation, which directly follows hydrolysis, is carried out at normal temperature or with heating under 100°C. Condensation at temperatures higher than 100°C will cause gelation. It is possible to accelerate condensation by distillation of the alcohol resulting from hydrolysis with heating above 80°C under normal pressure or reduced pressure. It is also possible to accelerate condensation by addition of a curing catalyst, such as basic compound, acid compound, and metal chelate compound. Before or during condensation, the liquid for condensation may be incorporated with an organic solvent to adjust the rate of condensation and to adjust the concentration, or with inorganic fine particles (such as silica sol) dispersed in water or organic solvent. The silicone resin usually increases in molecular weight according as condensation proceeds, thereby decreasing in solubility in water and alcohol resulting from hydrolysis. Consequently, the solvent to be added should preferably be an organic one with a relatively high polarity which readily dissolves the silicone resin and has a boiling point of at least 80°C. Examples of such organic solvents are listed below. Alcohols, such as isopropyl alcohol, n-butanol, isobutanol, t-butanol, and diacetone alcohol; ketones, such as methyl propyl ketone, diethyl ketone, methyl isobutyl ketone, cyclohexanone, and diacetone alcohol; ethers, such as dipropyl ether, dibutyl ether, anisole, dioxane, ethylene glycol monoethyl ether, ethylene glycol monobutyl ether, propylene glycol monomethyl ether, propylene glycol monomethyl ether acetate; and esters, such as propyl acetate, butyl acetate, and cyclohexyl acetate.

The silicone resin obtained by hydrolysis and ensuing condensation should have a weight average molecular weight (in terms of polystyrene determined by GPC) of at least 1,500, preferably from 1,500 to 50,000, more preferably from 2,000 to 20,000. With a molecular weight smaller than the lower limit, the silicone resin will give rise to a coating film poor in toughness and liable to cracking. With a molecular weight larger than the upper limit, the silicone resin will give rise to a coating film poor in hardness and liable to whitening due to phase separation therein.

The composition for weather-resistant hard coating contains the second component (2), which is a vinyl copolymer having organic ultraviolet-absorbing groups and reactive groups in or as side chains thereof. The copolymer should preferably be constructed such that the organic ultraviolet-absorbing groups as well as the reactive groups bond to the main chain thereof. This copolymer may be obtained by copolymerization from the vinyl monomer having organic ultraviolet-absorbing group as the component (2-1), the vinyl monomer having reactive group as the component (2-2), and the other monomer as the component (2-3) capable of copolymerization with above-mentioned monomers.

No specific restrictions are imposed on the vinyl monomer having organic ultraviolet-absorbing groups as the component (2-1) so long as it contains polymerizable vinyl groups and ultraviolet-absorbing groups in the molecule thereof. UV-absorbing chromophore groups are well-known.

A typical example of the vinyl monomer having organic ultraviolet-absorbing groups as the component (2-1) is a (meth)acrylic monomer having an ultraviolet-absorbing group in the molecule thereof. It includes a benzotriazole compound represented by the formula (2-1-1) below and a benzophenone compound represented by the formula (2-1-2) below. 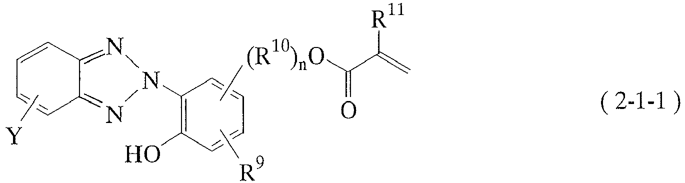 wherein Y is a hydrogen atom or chlorine atom; R⁹ is a hydrogen atom, methyl group, or tertiary alkyl group having 4 to 8 carbon atoms; R¹⁰ is a linear or branched alkylene group having 2 to 10 carbon atoms; R¹¹ is a hydrogen atom or methyl group; and n is 0 or 1. 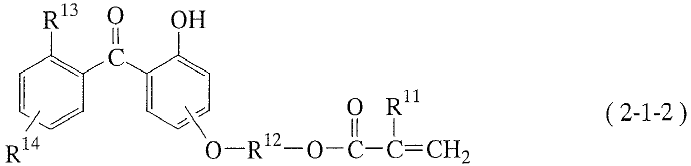 wherein R¹¹ is defined as above; R¹² is a unsubstituted or substituted linear or branched alkylene group having 2 to 10 carbon atoms; R¹³ is a hydrogen atom or hydroxyl group; and R¹⁴ is a hydrogen atom, hydroxyl group, or an alkoxyl group having 1 to 6 carbon atoms.

Examples of the C₄₋₈ tertiary alkyl group represented by R⁹ in the formula (2-1-1) above include tert-butyl group, tert-pentyl group, tert-hexyl group, tert-heptyl group, tert-octyl group, and di-tert-octyl group.

Examples of the linear or branched C₂₋₁₀ alkylene group represented by R¹⁰ in the formula (2-1-1) above include ethylene group, trimethylene group, propylene group, tetramethylene group, 1,1-dimethyltetramethylene group, butylene group, octylene group, and decylene group.

Examples of the linear or branched C₂₋₁, alkylene group represented by R¹² in the formula (2-1-2) above include the same one as represented by R¹⁰, with or without the hydrogen atoms therein partially replaced by halogen atoms. Examples of the C₁₋₆ alkoxyl group represented by R¹⁴ include methoxy group, ethoxy group, propoxy group, and butoxy group.

Examples of the benzotriazole compound represented by the formula (2-1-1) above include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)-phenyl]-5-chloro-2H-benzotriazole, and 2-[2'-hydroxy-3'-methyl-5'-(8-(meth)acryloxyoctyl)phenyl]-2H-benzotriazole.

Examples of the benzophenone compound represented by the formula (2-1-2) above include the following. 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone.

Examples of the ultraviolet-absorbing vinyl monomer mentioned above include benzotriazole compounds represented by the formula (2-1-1). Preferable among them is 2-[2'-hydroxy-5'-(2-(meth)acryloxyethyl)phenyl]-2H-benzotriazole. Moreover, the ultraviolet-absorbing vinyl monomers may be used alone or in combination with at least one another.

The vinyl monomer having an organic ultraviolet-absorbing group, as the component (2-1), should be used in an amount of 5 to 50 % by weight, preferably 5 to 30 % by weight for the total amount of the copolymer. With an amount less than 5 % by weight, it does not give good weather resistance. With more than 50% by weight it may adversely affect the adhesion of the coating film and cause whitening of the coating film (which makes the coating film look poor).

The vinyl monomer having a reactive group, as the component (2-2), is not specifically restricted so long as it contains one polymerizable vinyl functional group and one or more reactive groups in one molecule.

Examples of the polymerizable vinyl functional group include organic groups having 2 to 12 carbon atoms such as vinyl group, vinyloxy group, (meth)acryloxy group, and (α-methyl)styryl group. Typical examples include vinyl group, 5-hexenyl group, 9-decenyl group, vinyloxymethyl group, 3-vinyloxypropyl group, and (meth)acryloxy group. Of these examples, (meth)acryloxy group is desirable because of its reactivity and availability.

Examples of the reactive group include alkoxysilyl group, hydroxyl group, epoxy group, carboxylic group, and amino group. Of these examples, alkoxysilyl group, hydroxyl group, and epoxy group are desirable because of their reactivity and availability.

Examples of the vinyl monomer having the reactive group, as the component (2-2), include those having a hydroxyl group such as: 2-hydroxyethyl methacrylate, 2-hydroxypropyl methacrylate, 3-hydroxypropyl methacrylate, 2-hydroxybutyl methacrylate, 4-hydroxybutyl methacrylate, 3-chloro-2-hydroxypropyl methacrylate, polyethyleneglycol methacrylate, polypropyleneglycol methacrylate, poly(ethyleneglycolpropyleneglycol) methacrylate, poly(ethyleneglycoltetramethyleneglycol) methacrylate, poly(propyleneglycoltetramethyleneglycol) methacrylate, glycerol methacrylate, polycaprolactone methacrylate, acrylates thereof, hydroxyethyl vinyl ether, hydroxypropyl vinyl ether, hydroxybutyl vinyl ether, diethylene glycol monovinyl ether, and cyclohexenedimethanol divinyl ether. Of these examples, 2-hydroxyethyl methacrylate, 3-hydroxypropyl methacrylate, and 4-hydroxybutyl methacrylate and acrylates thereof are preferable because of their reactivity and availability.

Examples of the vinyl monomer having the reactive group, as the component (2-2), include those having an alkoxysilyl group as listed below. Methacryloxymethyltrimethoxysilane, methacryloxypropyltrimethoxysilane, methacryloxyundecyltrimethoxysilane, methacryloxypropylmethyldimethoxysilane, methacryloxypropyldimethylmethoxysilane, methacryloxypropyltriethoxysilane, acryloxypropyltrimethoxysilane, acryloxypropylmethyldimethoxysilane, acryloxypropyldimethylmethoxysilane, acryloxypropyltriethoxyilane, acryloxymethyltrimethoxysilane, acryloxyundecyltrimethoxysilane, vinyltrimethoxysilane, vinyltriethoxysilane, vinylmethyldimethoxysilane, allyltrimethoxysilane, styryltrimethoxysilane, styrylmethyldimethoxysilane, and styryltriethoxysilane. Of these examples, the following are preferable because of their availability, handling properties, crosslink density, and reactivity. Methacryloxypropyltrimethoxysilane, methacryloxypropylmethyldimethoxysilane, methacryloxypropyldimethylmethoxysilane, acryloxypropyltrimethoxysilane, and acryloxypropylmethyldimethoxysilane.

Examples of the vinyl monomer having the reactive group, as the component (2-2), also include glycidyl methacrylate having an epoxy group.

Examples of the vinyl monomer having the reactive group, as the component (2-2), also include those compounds having a hydroxyl group as listed below. 2-hydroxyethyl methacrylate, 2-hydroxypropyl methacrylate, 3-hydroxypropyl methacrylate, 2-hydroxybutyl methacrylate, and 4-hydroxybutyl methacrylate, and acrylates thereof.

The vinyl monomer having a reactive group, as the component (2-2), should be used in an amount of 2 to 30 % by weight, preferably 3 to 20 % by weight, for the total amount of the copolymer. If the amount is less than 2 % by weight, the resulting vinyl copolymer is poor in compatibility with the silicone resin as the component (1), which leads to the whitening of the coating film. In addition, the vinyl monomer in an insufficient amount does not form complete three-dimensional crosslinking between the reactive group in the vinyl copolymer and the silanol group in the silicone resin, which prevents the coating film from improving in heat resistance and durability. By contrast, if the amount exceeds 30 % by weight, the resulting vinyl copolymer has an excessively high polarity and the coating film will be poor in adhesion after dipping in boiling water.

The vinyl monomer having a reactive group as the component (2-2) may be used alone or in combination with at least one another.

The other monomer (2-3) copolymerizable with the above-mentioned monomers (2-1) and (2-2) is not specifically restricted so long as it is capable of copolymerization. It includes, for example, (meth)acryl monomer having a cyclic hindered amine structure, (meth)acrylic ester, (meth)acryronitrile, (meth)acrylamide, alkyl vinyl ether, alkyl vinyl ester, styrene, and derivatives thereof.

Typical examples of the (meth)acryl monomer having a cyclic hindered amine structure include 2,2,6,6-tetramethyl-4-piperidinylmethacrylate and 1,2,2,6,6-pentamethyl-4-piperidinylmethacrylate. They may be used alone or in combination with at least one another. They can be used as a light stabilizer.

Typical examples of the (meth)acrylic ester and derivatives thereof include the following. (Meth)acrylic esters of monohydric alcohol, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcylcohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and benzyl (meth)acrylate; (meth)acrylic esters of alkoxy(poly)alkyleneglycol, such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, and 4-methoxybutyl (meth)acrylate, methoxypolyethyleneglycol (meth)acrylate with 2 to 20 ethyleneglycol units and methoxypolypropyleneglycol (meth)acrylate with 2 to 20 propyleneglycol units; poly(meth)acrylic esters of polyhydric alcohol, such as ethyleneglycol di(meth)acrylate, propyleneglycol di(meth)acrylate, butyleneglycol di(meth)acrylate, glycerin di(meth)acrylate, glycerin tri(meth)acrylate, pentaerythritol di(meth)acrylate, pentaerythritol tetra(meth)acrylate, 1,4-cyclohexanediol di(meth)acrylate, polyethyleneglycol di(meth)acrylate with 2 to 20 ethyleneglycol units, and polypropyleneglycol di(meth)acrylate with 2 to 20 propyleneglycol units; (poly)esters of non-polymerizable polybasic acid with hydroxyalkyl (meth)acrylate, such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate, and di[2-(meth)acryloyloxyethyl] phthalate; amino group-containing (meth)acrylic esters, such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate, and 4-(N,N-dimethylamino)butyl (meth)acrylate; and epoxy group-containing (meth)acrylic esters, such as glycidyl (meth)acrylate.

Examples of the derivatives of (meth)acrylonitrile include α-chloroacrylonitrile, α-chloromethylacrylonitrile, α-trifluoromethylacrylonitrile, α-methoxyacrylonitrile, α-ethoxyacrylonitrile, and vinylidene cyanide.

Examples of the (meth)acrylamide include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone(meth)acrylamide, N-methylol(meth)acrylamide, N-(2-hydroxyethyl)(meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide.

Examples of the alkyl vinyl ether include methyl vinyl ether, ethyl vinyl ether, butyl vinyl ether, and hexyl vinyl ether.

Examples of the alkyl vinyl ester include vinyl formate, vinyl acetate, vinyl acrylate, vinyl butyrate, vinyl caproate, and vinyl stearate.

Examples of the styrene and derivatives thereof include styrene, α-methylstyrene, and vinyltoluene.

Preferable among the foregoing monomers are derivatives of (meth)acrylic esters such as methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, methacryloxypropyltrimethoxysilane, methacryloxypropylmethyldimethoxysilane, methacryloxypropyltriethoxysilane, and vinyltrimethoxysilane.

The other copolymerizable monomer (2-3) may be mixed with one or more of the foregoing monomers.

The foregoing other copolymerizable monomer (2-3) should be used in an amount of 20 to 93 % by weight, preferably 50 to 92 % by weight for the total amount of the copolymer. If the amount of the other copolymerizable monomer (2-3) is excessively large, the resulting vinyl copolymer is poor in heat resistance, durability, and weather resistance on account of insufficient crosslinking with the silicone resin (1).

The foregoing vinyl copolymer (2) may be obtained by copolymerization between the vinyl monomer containing an organic ultraviolet-absorbing group (2-1), the vinyl monomer containing a reactive group (2-2), and the other copolymerizable monomer (2-3). This copolymerization is facilitated by addition of a radical polymerization initiator to a solution containing the monomers and reaction with heating at 50 to 150°C, particularly 70 to 120°C for one to ten hours, particularly three to eight hours. The initiator is one selected from peroxides such as dicumyl peroxide and benzoyl peroxide, or from azo compounds such as azobisisobutylonitrile.

The vinyl copolymer should preferably have a weight average molecular weight of 1,000 to 300,000, particularly 5,000 to 250,000, in terms of polystyrene determined by gel permeation chromatography (GPC). In the case of an excessively large molecular weight, the copolymer is difficult to produce or handle owing to an excessively high viscosity. In the case of an excessively small molecular weight, the resulting coating film is poor in appearance due to whitening, adhesion, durability, and weather resistance.

The silicone resin as the component (1) and the vinyl copolymer as the component (2) should be used in such amounts that the ratio of solids in the former to solids in the latter is from 10/90 to 50/50, particularly from 15/85 to 45/55, by weight. If the amount of the component (1) is less than the lower limit (10/90), the resulting hard coating would be poor in scratch resistance. If the amount of the component (2) is less than the lower limit (50/50), the resulting hard coating would be poor in adhesion to the substrate.

The component (3) is a curing catalyst in common use. To be specific, it is a curing catalyst that promotes the condensation reaction of the condensable groups such as silanol group and alkoxyl group contained in the silicone resin as the component (1). It includes, for example, basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammnium acetate, n-hexylamine, tributylamine, diazabicycloundecene (DBU), and dicyandiamide; metal-containing compounds such as tetraisopropyl titanate, tetrabutyl titanate, titanium acetylacetonate, aluminum triisobutoxide, aluminum triisopropoxide, tris(acetylacetonate) aluminum, diisopropoxy(ethylacetoacetate) aluminum, aluminum perchlorate, aluminum chloride, cobalt octylate, cobalt acetylacetonate, iron acetylacetonate, tin acetylacetonate, dibutyltin octylate, and dibutyltin laurate; and acid compounds such as p-toluenesulfonic acid and trichloroacetic acid. Preferable among these examples are sodium propionate, potassium acetate, sodium formate, trimethylbenzylammonium hydroxide, tetramethylammonium hydroxide, tris(acetylacetonate) aluminum, and diisopropoxy(ethylacetoacetate) aluminum.

The amount of the component (3) is not specifically restricted so long as it is large enough to cure the silicone resin as the component (1). Typically, it should be 0.0001 to 30 % by weight, preferably 0.001 to 10 % by weight for the amount of solids in the silicone resin. With an amount less than the lower limit, it does not perform curing completely, and hence the resulting hard coating is poor in hardness. If the amount exceeds the upper limit, the resulting hard coating is subject to cracking and poor in water resistance.

The component (4) is a solvent. It is not specifically restricted so long as it dissolves or disperses the components (1), (2), and (3). It should be composed mainly of an organic solvent with a high polarity. Examples of such an organic solvent include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate. They may be used alone or in combination with at least one another.

The component (4) should be used in an amount of 1 to 30 % by weight, preferably 5 to 25 % by weight for the total amount of solids in the composition for weather-resistant hard coating. With an amount less than or more than the range specified above, the component (4) would adversely affect the coating film formed from the composition by curing. In other words, in the case of insufficient amount, the resulting coating film would be uneven and poor in hardness and scratch resistance. In the case of excess amount, the resulting coating film would be subject to whitening and scratching and have a poor appearance due to stripy flow pattern.

The composition for weather-resistant hard coating may optionally contain water as component (5). This water may be newly added or may be one which remains in the silicone resin as the component (1) after (co)hydrolysis. Water as the component (5) partly accelerates the crosslinking reaction between the silicone resin as the component (1) and the reactive group-containing vinyl copolymer as the component (2), thereby facilitating the formation of the reaction product of the component (1) and the component (2). This reaction product is one which results from the curing of the composition for weather-resistant hard coating. And this curing is partly promoted by the water which previously exists in the composition.

The water to be used for this purpose is not specifically restricted; however, acidic or neutral water is preferable. The substance that makes the water acidic should preferably be one which does not remain in the coating film after the composition has been made into the hard coating. The residues of such a substance make the coating film poor in adhesion and crack resistance. An organic acid is preferable for this purpose. Examples of the organic acid include organic carboxylic acids such as formic acid, acetic acid, propionic acid, and oxalic acid. Of these examples, formic acid and acetic acid are desirable because they easily evaporate, leaving nothing behind in the coating film.

The water should be used in any amount without specific restrictions so long as it is uniformly miscible with the vinyl copolymer as the component (2). A typical amount should be less than 5 mol, preferably from 0.1 to 5 mol, and more preferably 0.3 to 3 mol, for 1 mol of the reactive group in the vinyl copolymer as the component (2). Water in an excess amount deteriorates storage stability and causes viscosity increase or gelation during storage or use.

The composition for weather-resistant hard coating may also optionally contain inorganic oxide fine particles as component (6). Examples of the inorganic oxide fine particles include silica, zinc oxide, titanium oxide, and cerium oxide. They should be added in an adequate amount in order to enhance the hardness, scratch resistance, and ultraviolet-absorbing performance of the coating film. The fine particles should preferably be those of nano size which have a particle diameter of approximately 5 to 200 nm and dispersed in water and organic solvent. Any commercial ones of aqueous dispersion type or organic dispersion type may be used. A typical example of silica is Snowtex O, OS, OL, and methanol silica sol made by Nissan Chemical Industries, Ltd.

The zinc oxide, titanium oxide, and cerium oxide should be ones which are sufficiently low in photocatalytic activity. Oxide fine particles usually act not only as an ultraviolet shield but also as a photocatalyst. If such oxide fine particles are used as an ultraviolet shield for the coating material, the resulting coating film suffers cracking because the binder deteriorates by the photocatalyst. This drawback is avoided by using the oxide fine particles which are inactive as a photocatalyst. Examples of such oxide fine particles include coated ones which are surface-coated with an oxide (such as silica) or hydroxide, preferably with additional surface treatment with a hydrolyzable silane. Such surface-coated oxide fine particles may be obtained by coating the surface of oxide fine particles with an alkoxide of Al, Si, Zr, or Sn, followed by hydrolysis which forms an oxide film, or by coating the surface of oxide fine particles with an aqueous solution of sodium silicate, followed by neutralization which causes an oxide or hydroxide to precipitate on the surface and heating which crystallizes the precipitated oxide or hydroxide. Such oxide fine particles are commercially available from CIK Nanotech K.K. under trade names of ZNTANB 15 wt%-E16, -E34, and RTTDNB 15 wt%-E68, -E88.

The inorganic oxide fine particles as the component (6) should be used in an amount of 0 to 40 parts by weight for the total amount (100 parts by weight) of the components (1), (2), and (3). If the component (6) is used, its amount should preferably be at least 2 parts by weight.

The composition may optionally be incorporated with an ultraviolet-absorbing agent and/or organic ultraviolet light stabilizer other than the component (2). Such agents should preferably be ones which are highly miscible with the composition for weather-resistant hard coating and low in volatility.

Preferable examples of the organic ultraviolet-absorbing agent are derivatives of compounds having the main skeleton of hydroxybenzophenone, benzotriazole, cyanoacrylate, or triazine. Other preferable examples are vinyl polymers or copolymers of other vinyl monomers containing the foregoing organic ultraviolet-absorbing agent in their side chain or silylated organic ultraviolet-absorbing agents or condensate of their (partial) hydrolyzate.

Typical examples of the organic ultraviolet-absorbing agents are listed below. 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-t-methylphenyl)benzotriazole, 2-(2-hydroxy-5-t-octylphenyl)benzotriazole, 2-(2-hydroxy-3,5-di-t-butylphenyl)benzotriazole, ethyl-2-cyano-3,3-diphenyl acrylate, 2-ethylhexyl-2-cyano-3,3'-diphneyl acrylate, 2-(2-hydroxy-4-hexyloxylphenyl)-4,6-diphenyltriazine, (co)polymer of 2-hydroxy-4-(2-acryloxyethoxy)benzophenone, (co)polymer of 2-(2'-hydroxy-5'-methacryloxyethylphenyl)-2H-benzotriazole, reaction product of 2,4-dihydroxybenzophenone and γ-glycidoxypropyltrimethoxysilane, reaction product of 2,2',4,4'-tetrahydroxybenzophenone and γ-glycidoxypropyltrimethoxysilane, and (partial) hydrolyzates thereof. They may be used alone or in combination with at least one another.

The organic ultraviolet-absorbing agent should be used in an amount of 0 to 100 parts by weight for the total amount (100 parts by weight) of the components (1), (2), and (3). If it is used, its amount should preferably be 0.3 to 50 parts by weight, particularly 0.3 to 30 parts by weight.

The organic ultraviolet light stabilizer should preferably be one which has at least one cyclic hindered amine structure in its molecule and which is highly miscible with the composition for hard coating according to the present invention and is only slightly volatile. Examples of the organic ultraviolet light stabilizer are listed below. 3-dodecyl-1-(2,2,6,6-tetramethyl-4-piperidinyl)pyrrolidine-2,5-dione, N-methyl-3-dodecyl-1-(2,2,6,6-tetramethyl-4-piperidinyl)-pyrrolidine-2,5-dione, N-acetyl-3-dodecyl-1-(2,2,6,6-tetramethyl-4-piperidinyl)-pyrrolidine-2,5-dione, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) 1,2,3,4-butane-tetracarboxylate, tetrakis(1,2,2,6,6-pentamethyl-4-piperidyl) 1,2,3,4-butane-tetracarboxylate, condensate of 1,2,3,4-butanetetracarboxylic acid, 2,2,6,6-tetramethyl-piperidinol, and tridecanol, 8-acetyl-3-dodecyl-7,7,9,9-tetramethyl-1,3,8-triazaspiro-[4,5]decane-2,4-dione, condensate of 1,2,3,4-butanetetracarboxylic acid, 1,2,2,6,6-pentamethyl-4-piperidinol, and β,β,β,β'-tetramethyl-3,9-(2,4,8,10-tetraoxaspiro[5,5]-undecane) diethanol, and condensate of 1,2,3,4-butanetetracarboxylic acid, 1,2,2,6,6-pentamethyl-4-piperidinol, and β,β,β,β'-tetramethyl-3,9-(2,4,8,10-tetraoxaspiro[5,5]-undecane) diethanol. The organic ultraviolet light stabilizer may be stabilized by combination with a silylated light stabilizer exemplified below, which is disclosed in JP-B S61-56187. 2,2,6,6-tetramethylpiperidino-4-propyltrimethoxysilane, 2,2,6,6-tetramethylpiperidino-4-propylmethyldimethoxysilane, 2,2,6,6-tetramethylpiperidino-4-propyltriethoxysilane, and 2,2,6,6-tetramethylpiperidino-4-propylmethyldiethoxysilane, and (partial) hydrolyzates thereof. These light stabilizers may be used alone or in combination with at least one another.

The organic ultraviolet light stabilizer should be used in an amount of 0 to 10 parts by weight for the total amount (100 parts by weight) of the components (1), (2), and (3). If it is used, its amount should preferably be 0.03 to 10 parts by weight, particularly 0.03 to 7.5 parts by weight.

The weather-resistant hard coating composition according to the present invention may be incorporated with such optional components as pH adjustor, leveling agent, dehydrant, thickener, pigment, dye, metal powder, antioxidant, heat reflecting/absorbing agent, flexibilizer, antistatic agent, antistaining agent, and water repellent, in an amount not harmful to the effect of the present invention.

The composition should have its pH adjusted in an adequate range, preferably from 2 to 7, more preferably from 3 to 6, so that it keeps good storage stability. With a pH value outside this range, it will be poor in storage stability. The pH will be adjusted in this range by adding a pH adjustor. A basic compound such as ammonia and ethylenediamine should be used for adjustment of pH values lower than the foregoing range, and an acidic compound such as hydrochloric acid, nitric acid, acetic acid, and citric acid should be used for adjustment of pH values higher than the foregoing range. No specific restrictions are imposed on the method for pH adjustment.

The composition may be applied to organic resin substrates by any ordinary method, such as brushing, spraying, dipping, flow coating, roll coating, curtain coating, spin coating, and knife coating.

The curing of the coating film formed from the composition for weather-resistant hard coating may be allowed to stand in the atmospheric air for air-drying or heat-drying. The temperature and duration of curing are not specifically restricted. An adequate curing temperature should be lower than the heat resisting temperature of the substrate, and an adequate curing time is ten minutes to two hours. To be more specific, curing should be accomplished at 80 to 135°C for 30 minutes to two hours.

The resulting hard coating is not specifically restricted in film thickness. An adequate film thickness should be selected according to application. A preferable thickness is 0.1 to 50 µm, particularly 3 to 25 µm for the coating film to have satisfactory hardness, good scratch resistance, extended stable adhesion, and extended weather resistance.

The composition may be incorporated with a fluorine surfactant or silicone surfactant, such as "Fluorad FC-4430" (from Sumitomo 3M Limited) and "KP-341" (from Shin-Etsu Chemical Co., Ltd.), in an adequate amount for the resulting coating film to have a smooth surface. Moreover, it may also be incorporated with a curing catalyst for crosslinking, such as "Neostan U-810" (from Nitto Kasei Co., Ltd.), "B-7" (from Nippon Soda Co., Ltd.), and "Orgatix ZA-60, TC-200" (from Matsumoto Pharmaceutical Manufacture Co., Ltd.) in a catalytic amount to accelerate the curing of the coating film.

Upon application onto a substrate, the composition cures on the substrate to form a hard coating film which provides extended weather resistance owing to the effect produced by the organic ultraviolet-absorbing group contained in the component (2) constituting the hard coating layer.

### Organic resin substrate

The composition should preferably be applied to the surface of the organic resin substrate or the plastics material formed from any one of polycarbonate, polystyrene, acrylic resin, modified acrylic resin, urethane resin, thiourethane resin, polycondensate of halogenated bisphenol-A and ethylene glycol, acrylurethane resin, acrylic resin containing halogenated aryl groups, and sulfur-containing resin. The resin substrate may be one having a surface which has undergone chemical treatment, corona discharge treatment, plasma treatment, acid or alkali treatment, or coating with a material different from the substrate. Examples of the coated resin substrate include a laminate sheet composed of a base of polycarbonate resin and a surface layer of acrylic resin or urethane resin, or a laminate sheet composed of a base of polyester resin and a surface layer of acrylic resin. Such a laminate sheet may be formed by coextrusion or lamination coating.

Thus, the present invention provides a coated article which composed of an organic resin substrate, especially a molded substrate of polycarbonate resin, which has a cured coating film of the composition for weather-resistant hard coating as defined above formed preferably directly on at least surface. Desirably the resulting coated article passes the initial adhesion test and the adhesion test after dipping in boiling water in a ratio of at least 97% and it gives a ΔHz (delta haze) value less than 15% in the Taber abrasion test.

Here, the initial adhesion test and the adhesion test after dipping in boiling water are carried out in accordance with ASTM D870. This test method consists of making crosscuts (11 cuts each in the horizontal and vertical directions at intervals of 1 mm for division into 100 small squares) in the coating film with a razor blade, and firmly putting a piece of adhesive tape "Cellotape" (trademark) (from Nichiban K.K.) on the squares and abruptly peeling off the adhesive tape in the direction at 90°. The test result is expressed in terms of the area (%) of the coating film which remains without being peeled off.

The Taber abrasion test is carried out in accordance with ASTM D1044. This test method consists of subjecting a specimen to abrasion by the abrading ring CS-10F attached to the Taber abrading machine, which turns 500 times under a load of 500 g, and then measuring the haze of the specimen. The test result is expressed in terms of ΔHz (delta haze) % which is the difference in haze measured before and after abrasion.

### EXAMPLES

The invention and its effects will be illustrated in more detail with reference to the following Synthesis Examples, Examples and Comparative Examples. In the following Examples, "%" means "% by weight" and "parts" means "parts by weight". The viscosity is expressed in terms of values measured at 25°C in accordance with JIS Z8803. The weight average molecular weight is expressed in terms of standard polystyrene determined by gel permeation chromatography (GPC).

### SYNTHESIS OF SILICONE RESIN AS COMPONENT (1)

### Synthesis Example 1 [reference only]

In a 2-liter flask were placed 272 g (2.0 Si mol) of methyltrimethoxysilane and 15 g (0.1 Si mol) of tetramethylsilane. After cooling to about 10°C, the flask was given dropwise 211 g of "Snowtex 0" (aqueous dispersion of silica sol containing 20% SiO₂ with an average particle diameter of 15 to 20 nm, made by Nissan Kagaku Kogyo K.K.) and 93 g of aqueous solution of 0.25N acetic acid for hydrolysis, with the contents of the flask cooled below 40°C. This step was followed by stirring at a temperature of up to 40°C for one hour and then at 60°C for three hours to complete hydrolysis.

Subsequently, the flask was given 300 g of cyclohexane and the reaction product was freed of methanol (resulting from hydrolysis) by distillation under normal pressure, with the liquid heated up to 92°C. The resulting condensate was diluted with 400 g of isopropanol, and the resulting solution was mixed by stirring with 1.6 g of acetic acid and 1.6 of 25% aqueous solution of tetramethylammonium hydroxide (TMAH). After filtration through a filter paper, there was obtained a colorless clear silicone resin solution containing 19.2% of non-volatile matter and having a weight average molecular weight of 2,510 with a dispersity of 1.84 determined by GPC.

The thus obtained silicone resin solution was incorporated with 0.1 g of polyether-modified silicone "KP-341" (made by Shin-Etsu Chemical Co., Ltd.) as a leveling agent to impart a smooth surface to the coating film. After stirring, there was obtained a silicone resin solution as the component (1-a).

### Synthesis Example 2

In a 1-liter flask were placed 65 g (0.48 Si mol) of 1,2-styrenebis(trimethoxysilane), 300 g of "IPA-ST" (silica sol dispersed in isopropanol, containing 30% SiO₂ with an average particle diameter of 15 to 20 nm, made by Nissan Chemical Industries, Ltd.), 100 g of isopropanol, and 2 g of "Lewatit K2649DR" (cation exchange resin, made by Lanxess K.K.). The flask was given 40 g of pure water at room temperature, followed by stirring at 40°C for three hours to complete hydrolysis and condensation. After cooling to room temperature, the reaction product was incorporated with 170 g of acetylacetone, 6 g of aluminum acetylacetonate, and 0.1 g of polyether-modified silicone "KP-341" (made by Shin-Etsu Kagaku Kogyo K.K.) as a leveling agent. After stirring, there was obtained a silicone resin solution, containing 20.2% of non-volatile matter, having a weight average molecular weight of 1,830 with a dispersity of 1.72 determined by GPC. This solution is designated as the component (1-b).

### Synthesis Example 3

The same procedure as in Synthesis Example 2 was repeated except that the 1,2-ethylenebis(trimethoxysilane) was replaced by 40 g (0.12 Si mol) of hydroxybenzophenoneoxypropyltrimethoxysilane and 19.6 g (0.12 Si mol) of 1,6-hexylenebis(trimethoxysilane). The reaction product was diluted with isopropanol so that the resulting solution contains non-volatile matter in a concentration of 20%. Thus, there was obtained a silicone resin solution, containing 19.4% of non-volatile matter, having a weight average molecular weight of 2,050 with a dispersity of 1.82 determined by GPC. This solution is designated as the component (1-c).

### Synthesis Example 4

The same procedure as in Synthesis Example 2 was repeated except that the 1,2-ethylenebis(trimethoxysilane) was replaced by 49.5 g (0.24 Si mol) of "X-12-965" (tris(3-trimethoxysilylpropyl)isocyanurate, made by Shin-Etsu Chemical Co., Ltd.). The reaction product was diluted with isopropanol so that the resulting solution contains non-volatile matter in a concentration of 20%. Thus, there was obtained a silicone resin solution, containing 18.9% of non-volatile matter, having a weight average molecular weight of 1,830 with a dispersity of 2.05 determined by GPC. This solution is designated as the component (1-d).

### SYNTHESIS OF VINYL COPOLYMER AS COMPONENT (2), HAVING ORGANIC ULTRAVIOLET-ABSORBING GROUPS AND REACTIVE GROUPS AS SIDE GROUPS

### Synthesis Example 5

In a 2-liter flask equipped with a stirrer, condenser, and thermometer was placed 167 g of diacetone alcohol as a solvent. The solvent was heated at 80°C under a nitrogen stream. To the flask was added a portion (390 g) of a previously prepared solution of monomer mixture composed of 81.0 g of (2-[2'-hydroxy-5'-(2-methacryloxyethyl)phenyl]-2H-benzotriazole ("RUVA-93" made by Otsuka Chemical Co., Ltd), 67.5 g of 2-hydroxyethyl methacrylate, 301.5 g of methyl methacrylate, and 355 g of diacetone alcohol. Sequentially, to the flask was further added a portion (80 g) of a previously prepared solution containing 2.3 g of 2,2'-azobis(2-methylbutyronitrile) as a polymerization initiator dissolved in 177.7 g of diacetone alcohol. The reactants underwent reaction at 80°C for 30 minutes. To the flask were further added dropwise the remainders of the solutions of monomer mixture and polymerization initiator simultaneously at 80 to 90°C over 1.5 hours. The reaction product was stirred further at 80 to 90°C for five hours. Thus there was obtained a vinyl copolymer having organic ultraviolet-absorbing groups and reactive groups in the side chain. This product is designated as the component (2-a).

The thus obtained vinyl copolymer as the component (2-a) was found to contain 40.3% of non-volatile matter, 15% of hydroxyl group-containing vinyl monomer, and 18% of ultraviolet-absorbing monomer and to have a viscosity of 8,180 mPa·s, and a weight average molecular weight of 62,300 determined by GPC.

### Synthesis Examples 6 to 10

The same procedure as Synthesis Example 5 was repeated to obtain the vinyl copolymers having organic ultraviolet-absorbing groups and reactive groups in the side chain, which are designated as the components (2-b) to (2-f), respectively, except that the kind and amount of the monomer was replaced by those which are shown in Table 1.

### [Inorganic oxide fine particles as the component (6)]

The component (6) includes the component (6-a) and the component (6-b) which are defined as follows.
(6-a) "PMA-ST" made by Nissan Chemical Industries, Ltd., a dispersion of silica sol in propyleneglycol methyl ether acetate, containing 30% of solids.
(6-b) "RTTDNB 15 wt%-E88" made by C.I. Kasei Co., Ltd., a dispersion (with 15% solids in mixed alcohol containing a dispersant) of titanium oxide fine particles (produced by DC arc plasma method and subsequently coated with silica) having an average particle diameter (volume mean diameter D₅₀) of 99 nm.

### PREPARATION OF THE COMPOSITION FOR WEATHER-RESISTANT HARD COATING

### Example 1 [reference only]

A mixture was prepared by thoroughly mixing 35 g of the vinyl copolymer as the component (2-a) obtained in Synthesis Example 5 and 15 g of propyleneglycol methyl ether. To this mixture was added 30 g of the silicone resin solution as the component (1-a) obtained in Synthesis Example 1. After thorough mixing, the resulting mixture was filtered through a nylon mesh strainer (#100). Thus there was obtained the composition for weather-resistant hard coating which is designated as the component (a).

### Examples 2 to 5 (invention) and Comparative Examples 1 to 3

The same procedure as in Example 1 was repeated except that the kind and amount of the vinyl copolymer and silicone resin solution were changed and an optional additive was added as shown in Table 2. Thus there were obtained the compositions for weather-resistant hard coating, which are designated as the components (b) to (e) and the comparative components (f) to (h).

### PREPARATION AND EVALUATION OF COATED ARTICLES

### Example 6 (Reference); Examples 7 to 10

Each sample of the compositions for weather-resistant hard coating as the components (a) to (e) obtained in Examples 1 to 5 was applied to a surface-cleaned Lexan polycarbonate sheet (150 mm × 150 mm × 5 mm thick) by flow coating to form a coating film which would become a hard coating about 9 to 14 µm thick after curing. The coating film was heated for curing at 120°C for 60 minutes. Thus there was obtained an article with hard coating. This article was examined for its properties in the following manner. The results are shown in Table 3.

### Comparative Examples 4 to 6

Samples of coated articles were prepared in the same way as in Examples 6 to 10 from the compositions for weather-resistant hard coating obtained in Comparative Examples 1 to 3. The thus obtained samples were examined for their properties in the following manner. The results are shown in Table 4.

### METHODS FOR EVALUATION OF CURED COATING FILMS

### Clarity Hz

The sample of coated article was examined for clarity (or haze) by using a haze meter ("NDH2000" made by Nippon Denshoku Industries Co., Ltd.).

### Scratch resistance ΔHz

The sample of coated article was examined for scratch resistance in terms of difference in haze (ΔHz) measured before and after abrasion test. The abrasion test was carried out in accordance with ASTM D1044 by using a Taber abrasion tester equipped with an abrading ring CS-10F which turns 500 times under a load of 500 g.

### Initial adhesion

The sample of coated article was examined for initial adhesion by cross-cut adhesion test in accordance with ASTM D870. This test method consists of making crosscuts (11 cuts each in the horizontal and vertical directions at intervals of 1 mm for division into 100 small squares) in the coating film with a razor blade, and firmly putting a piece of adhesive tape ("Cellotape" from Nichiban Co., Ltd.) on the squares and abruptly peeling off the adhesive tape in the direction at 90°. The test result is expressed in terms of the area (%) of the coating film which remains without being peeled off.

### Adhesion after dipping in water

The sample of coated article was examined for adhesion after dipping in ion-exchanged water at 65°C for three days in the same way as used for the test of initial adhesion.

### Adhesion after dipping in boiling water

The sample of coated article was examined for adhesion after dipping in boiling ion-exchanged water for six hours in the same way as used for the test of initial adhesion.

### Weather resistance

The sample of coated article was examined for weather resistance by artificial weathering in "Eye Super UV tester W-151" made by Iwasaki Electric Co., Ltd. In this test, the sample was subjected to light at an illuminance of 50 mW/cm² and water spray (for ten seconds every hour) for five hours at a black panel temperature of 63°C and a humidity of 50% RH and then for one hour at a black panel temperature of 30°C and a humidity of 95% RH. The cycle for exposure to light and water spray was repeated 40 times and 70 times.

Before and after this weathering test, the sample was examined for change in yellowing (ΔYI) in accordance with JIS K7103.

After this weathering test, the sample was also examined visually or microscopically (with a magnification of 250x) for cracking and peeling and rated according to the following criteria.

### Cracking

After the weathering test, the appearance of the coating film was graded as follows.
Good: No cracking
Fair: Slight cracking
Poor: Overall cracking

### Peeling

After the weathering test, the state of the coating film was graded as follows.
Good: No peeling
Fair: Partial peeling
Poor: Overall peeling

**Table 1**

| Composition of the vinyl copolymer (as component (2)) having organic ultraviolet-absorbing groups and reactive groups in the side chain | | | | | | | |
|---|---|---|---|---|---|---|---|
| Unit: Parts (wt% of solid matter) | | | | | | | |
| Synthesis Example | | 5 | 6 | 7 | 8 | 9 | 10 |
| Vinyl copolymer (2) | | 2-a | 2-b | 2-c | 2-d | 2-e | 2-f |
| Vinyl monomer containing ultraviolet-absorbing group (2-1) | RUVA - 1 | 81.0 (18%) | 103.5 (23%) | 103.5 (23%) | | | 81.0 (18%) |
| | RUVA-2 | | | 22.5 (5%) | | | |
| Vinyl monomer containing reactive group (2-2) | HEMA | 67.5 (15%) | | 22.5 (5%) | | 67.5 (15%) | |
| | MPTMS | | 67.5 (15%) | | | | |
| | GMA | | | 22.5 (5%) | | | |
| Other monomer (2-3) | MMA | 301.5 (67%) | 274.5 (61%) | 234.0 (52%) | 450.0 (100%) | 301.5 (67%) | 184.5 (41%) |
| | EMA | | | 45.0 (10%) | | 81.0 (18%) | 184.5 (41%) |
| | MHALS | | 4.5 (1%) | | | | |
| Total amount charged | | 450 | 450 | 450 | 450 | 450 | 450 |
| Non-volatile matter (%) | | 40.3 | 41.2 | 39.2 | 41.0 | 40.8 | 42.0 |
| Viscosity (mPa·s) | | 8180 | 7950 | 7280 | 6630 | 5860 | 8040 |
| GPC (Mw) | | 62,900 | 53,400 | 50,900 | 68,400 | 50,400 | 57,700 |

| | | | | | | | |
|---|---|---|---|---|---|---|---|
| (Remarks) RUVA-1: 2-[2'-hydroxy-5'-(2-methacryloxyethyl)phenyl]-2H-benzotriazole (RUVA-93, made by Otsuka Chemical Co., Ltd.) RUVA-2: 2-hydroxy-4-(2-acryloxyethyl)benzophenone (BP-1A, made by Osaka Organic Chemical Industry Ltd.) HEMA: 2-ethylhydroxy methacrylate MPTMS: γ-methacryloxypropyltrimethoxysilane GMA: Glycidyl methacrylate MMA: Methyl methacrylate EMA: Ethyl methacrylate MHALS: 1,2,2,6,6-pentamethyl-4-piperidyl methacrylate | | | | | | | |

**Table 2**

| Formulation of composition for weather-resistant hard coating | | | | | | | | | |
|---|---|---|---|---|---|---|---|---|---|
| Unit: Parts (wt% of solid matter) | | | | | | | | | |
| | | Ref. | Example | | | | Comparative Example | | |
| | | 1 | 2 | 3 | 4 | 5 | 1 | 2 | 3 |
| Composition for weather-resistant hard coating | | a | b | c | d | e | f | g | h |
| Silicone resin solution (1) (containing curing catalyst (3)) | | 1-a 45 (45%) | 1-c 30 (30%) | 1-b 25 (25%) | 1-b 30 (30%) | 1-d 40 (40%) | 1-a 30 (30%) | 1-b 30 (30%) | 1-b 30 (30%) |
| Details of solids in silicone resin solution | Silicone resin (%) | 35.1 | 9.9 | 7.5 | 9.0 | 16.8 | 23.8 | 9.0 | 9.0 |
| | Inorganic fine particles (%) silica | 9.0 | 18.9 | 16.5 | 19.8 | 21.6 | 6.1 | 17.8 | 19.8 |
| | Curing catalyst | 0.9 | 1.2 | 1.0 | 1.2 | 1.6 | 0.1 | 1.2 | 1.2 |
| Vinyl copolymer (2) | | 2-a 27.5 (55%) | 2-b 35 (70%) | 2-c 37.5 (75%) | 2-b 35 (70%) | 2-b 30 (60%) | 2-d 35 (70%) | 2-e 35 (70%) | 2-f 35 (70%) |
| Solvent (4) | | PGM 8.7 | DAA 15 | PGM 18.7 | PGM 12.3 | DAA 11.2 | PGM 15 | PGM 30 | PGM 15 |
| Water (5) | | | 0.1 | | | | | | |
| Inorganic fine particles (6) | | | | 6-a 6.7 | 6-b 6.7 | | | | |
| UV absorber other than (2-1) | | T400 0.4 | | | | T400 0.4 | | T400 5 | |

| | | | | | | | | | |
|---|---|---|---|---|---|---|---|---|---|
| (Remarks) PGM: Propyleneglycol methyl ether DAA: Diacetone alcohol T400: Triazine UV absorber ("Tinuvin 400" made by Ciba Specialty Chemicals Inc.) | | | | | | | | | |

**Table 3**

| Results of evaluation of articles with weather-resistant hard coating | | | | | | |
|---|---|---|---|---|---|---|
| Structure of coating film | | Ref. | Example | | | |
| | | 6 | 7 | 8 | 9 | 10 |
| Composition for weather-resistant hard coating | | a | b | c | d | e |
| Result of evaluation | | | | | | |
| Clarity Hz(%) | | 0.24 | 0.18 | 0.33 | 0.69 | 0.54 |
| Scratch resistance ΔHz (%) | | 13 | 9 | 5 | 7 | 6 |
| Initial adhesion (%) | | 100 | 98 | 100 | 99 | 100 |
| Adhesion after dipping in water at 65°C for 3 days (%) | | 99 | 89 | 100 | 100 | 99 |
| Adhesion after dipping in boiling water for 6 hours (%) | | 98 | 90 | 99 | 100 | 98 |
| Weathering test 40 cycles | Yellowing ΔYI | 0.81 | 0.63 | 0.39 | 0.49 | 0.52 |
| | Cracking | good | good | good | good | good |
| | Peeling | good | good | good | good | good |
| Weathering test 70 cycles | Yellowing ΔYI | 1.82 | 1.29 | 0.89 | 0.95 | 1.06 |
| | Cracking | good | good | good | good | good |
| | Peeling | good | good | good | good | good |

**Table 4**

| Results of evaluation of articles with weather-resistant hard coating | | | | |
|---|---|---|---|---|
| Structure of coating film | | Comparative Example | | |
| | | 4 | 5 | 6 |
| Composition for weather-resistant hard coating | | f | g | h |
| Result of evaluation | | | | |
| Clarity Hz(%) | | 3.42 | 0.21 | 1.94 |
| Scratch resistance ΔHz (%) | | 25 | 8 | 16 |
| Initial adhesion (%) | | 100 | 100 | 100 |
| Adhesion after dipping in water at 65°C for 3 days (%) | | 75 | 98 | 99 |
| Adhesion after dipping in boiling water for 6 hours (%) | | 82 | 99 | 99 |
| Weathering test 40 cycles | Yellowing ΔYI | 12.8 | 15.3 | 0.92 |
| | Cracking | good | good | good |
| | Peeling | poor | poor | good |
| Weathering test 70 cycles | Yellowing ΔYI | - | - | 3.58 |
| | Cracking | - | - | good |
| | Peeling | - | - | poor |

### Notes

(1) In respect of numerical ranges disclosed in the present description it will of course be understood that in the normal way the technical criterion for the upper limit is different from the technical criterion for the lower limit, i.e. the upper and lower limits are intrinsically distinct proposals.
(2) For the avoidance of doubt it is confirmed that in the general description above, in the usual way the proposal of general preferences and options in respect of different features of the present compositions, articles and methods constitutes the proposal of general combinations of those general preferences and options for the different features, insofar as they are combinable and compatible and are put forward in the same context.

## Claims

1. A coating composition, suitable for coating the surface of an organic resin substrate, said composition comprising the following components:
(1) silicone resin obtainable by (co)hydrolysis and condensation of at least one selected from alkoxysilanes of the following formulae (1-1), (1-2) and (1-3) and condensates of partial hydrolysates of such alkoxysilane, provided that the ratio (1-1)/[(1-2)+(1-3)], in terms of mol% of silicon, is from 50/50 to 0/100:
(R¹)ₘ(R²)ₙSi(OR³)₄₋ₘ₋ₙ (1-1)
wherein R¹ and R² are independently a hydrogen atom or an unsubstituted or substituted monovalent hydrocarbon group, in which the substituent groups may be connected each other, R³ is an alkyl group having 1 to 3 carbon atoms, and m and n are independently 0 or 1, with m+n being 0, 1, or 2,
(R⁴O)₃₋ₚ(R⁶)ₚSi-R⁸-Si(R⁷)_{q}(OR⁵)_{3-q} (1-2)
wherein R⁴ and R⁵ are independently an alkyl group having 1 to 3 carbon atoms, R⁶ and R⁷ are independently a hydrogen atom or an unsubstituted or substituted monovalent hydrocarbon group, R⁸ is an oxygen atom, phenylene group, or an unsubstituted or substituted alkylene group having 2 to 10 carbon atoms, and p and q are independently 0 or 1,
X-[(R¹⁵)Si(R¹⁶)_{y}(OR¹⁷)_{3-y}]_{z} (1-3)
wherein X is a 1,3,5-trimethylcyclotrisiloxane residue, 1,3,5,7-tetramethylcyclotetrasiloxane residue, or isocyanurate residue, R¹⁵ is an alkylene group having 1 to 3 carbon atoms,
R¹⁶ is a hydrogen atom or an unsubstituted or substituted monovalent hydrocarbon group, R¹⁷ is an alkyl group having 1 to 3 carbon atoms, y is 0 or 1, and z is 3 or 4;
(2) a vinyl copolymer having in its side chain an organic ultraviolet-absorbing group and a reactive group selected from an alkoxysilyl group, hydroxyl group, epoxy group, carboxylic acid group, and amino group;
(3) a curing catalyst; and
(4) a solvent;
wherein the silicone resin as component (1) and the vinyl copolymer as component (2) are present in such amounts in terms of solids that the ratio of (1)/(2) is from 10/90 to 50/50 by weight.

2. The composition as defined in claim 1, wherein in the silicone resin as component (1), said ratio (1-1)/[(1-2)+(1-3)] is from 30/70 to 0/100 in terms of mol% of silicon.

3. The composition as defined in claim 1 or 2, wherein
the formula (1-1) is specified such that R¹ is a methyl group or a monovalent hydrocarbon group substituted with an ultraviolet-absorbing group, m = 1, n = 0, and R³ is a methyl group; the formula (1-2) is specified such that R⁸ is an unsubstituted or substituted alkylene group having 2 to 8 carbon atoms, p and q each are 0, R⁴ and R⁵ each are a methyl group; and the formula (1-3) is specified such that X is an isocyanurate residue, y = 0, R¹⁷ is a methyl group, and z = 3.

4. The composition as defined in any one of claims 1 to 3, wherein the silicone resin as component (1) is obtained by hydrolysis and condensation from at least one selected from the group consisting of the alkoxysilanes represented by the formulas (1-2) and (1-3) and the condensates of partial hydrolyzates thereof.

5. The composition as defined in any one of claims 1 to 3, wherein the silicone resin as component (1) is obtained by hydrolysis and condensation of at least one selected from the group consisting of the alkoxysilanes represented by the formula (1-3) and the condensates of partial hydrolyzes thereof.

6. The composition as defined in any one of claims 1 to 5, wherein the component (2) is a copolymer obtained by copolymerization from the following monomer components (2-1) to (2-3):
(2-1) a vinyl monomer having an organic ultraviolet-absorbing group: 5 to 50 % by weight;
(2-2) a reactive group-containing vinyl monomer which contains at least one selected from the group consisting of alkoxysilyl group, hydroxyl group, and epoxy group: 2 to 30 % by weight; and
(2-3) other monomer copolymerizable with said monomers: 20 to 93 % by weight.

7. The composition as defined in claim 6, wherein the component (2-2) is a hydroxyl group-containing vinyl monomer.

8. The composition as defined in any one of claims 1 to 7, which further comprises water as component (5).

9. The composition as defined in any one of claims 1 to 8, which further comprises inorganic oxide fine particles as component (6).

10. The composition as defined in claim 9, wherein the component (6) is at least one selected from the group consisting of silica, zinc oxide, titanium oxide, and cerium oxide.

11. The composition as defined in any one of claims 1 to 10, which further comprises any organic ultraviolet-absorbing agent and/or organic ultraviolet light stabilizer other than the component (2).

12. A coated article comprising an organic resin substrate and a hard coating film formed directly on at least one surface thereof from a coating composition as defined in any one of claims 1 to 11, said coated article having the property that it passes the adhesion test, being an initial adhesion test and an adhesion test after dipping in boiling water, carried out in accordance with ASTM D870, in a ratio of at least 97%, and it gives a ΔHz (delta haze) value less than 15% in the Taber abrasion test, carried out in accordance with ASTM D1044.

13. The coated article as defined in claim 12 in which the organic resin substrate is a molded one formed from polycarbonate resin.

14. A method comprising coating an organic resin substrate, such as a polycarbonate resin substrate, by applying a coating composition as defined in any one of claims 1 to 11 on a surface of the organic resin substrate, preferably directly, and curing the composition.

15. A method of preparing a composition according to any one of claims 1 to 11, comprising combining said components (1) and (2) thereof, optionally comprising preliminary formation of the silicone resin (1) by said (co)hydrolysis and condensation of said alkoxysilane(s).

## Patentansprüche

1. Beschichtungszusammensetzung, geeignet zum Beschichten der Oberfläche eines organischen Harzsubstrats, wobei die Zusammensetzung die folgenden Komponenten umfasst:
(1) Siliconharz, das durch (Co-) Hydrolyse und Kondensation von zumindest einem erhalten werden kann, das aus Alkoxysilanen der folgenden Formeln (1-1), (1-2) und (1-3) und Kondensaten von Teilhydrolysaten solcher Alkoxysilane ausgewählt ist, vorausgesetzt, dass das Verhältnis von (1-1)/[(1-2) + (1-3)] in Bezug auf Mol-% von Silicium von 50/50 bis 0/100 beträgt:
**(R¹)ₘ(R²)ₙSi(OR³)₄₋ₘ₋ₙ** **(1-1)**
worin R¹ und R² jeweils unabhängig ein Wasserstoffatom oder eine unsubstituierte oder substituierte einwertige Kohlenwasserstoffgruppe sind, in der die Substituentengruppen miteinander verbunden sein können, R³ eine Alkylgruppe mit 1 bis 3 Kohlenstoffatomen ist und m und n jeweils unabhängig 0 oder 1 sind, wobei m + n 0, 1 oder 2 ist,
(**R⁴O**)**₃₋ₚ**(**R⁶**)**ₚSi**-**R⁸**-**Si**(**R⁷**)**_{q}**(**OR⁵**)**_{3-q}** **(1-2)**
worin R⁴ und R⁵ jeweils unabhängig eine Alkylgruppe mit 1 bis 3 Kohlenstoffatomen ist, R⁶ und R⁷ jeweils unabhängig ein Wasserstoffatom oder eine unsubstituierte oder substituierte einwertige Kohlenwasserstoffgruppe sind, R⁸ ein Sauerstoffatom, eine Phenylengruppe oder eine unsubstituierte oder substituierte Alkylengruppe mit 2 bis 10 Kohlenstoffatomen ist und p und q jeweils unabhängig 0 oder 1 sind,
**X-[ (R¹⁵)Si(R¹⁶)_{y}(OR¹⁷)_{3-y}]_{z}** **(1-3)**
worin X ein 1,3,5-Trimethylcyclotrisiloxanrest, 1,3,5,7-Tetramethylcyclotetrasiloxanrest oder Isocyanuratrest ist, R¹⁵ eine Alkylengruppe mit 1 bis 3 Kohlenstoffatomen ist, R¹⁶ ein Wasserstoffatom oder eine unsubstituierte oder substituierte einwertige Kohlenwasserstoffgruppe ist, R¹⁷ eine Alkylgruppe mit 1 bis 3 Kohlenstoffatomen ist, y 0 oder 1 ist und z 3 oder 4 ist;
(2) ein Vinyl-Copolymer mit einer organischen UV-absorbierenden Gruppe in dessen Seitenkette und einer reaktiven Gruppe, die aus einer Alkoxysilylgruppe, Hydroxylgruppe, Epoxygruppe, Carbonsäuregruppe und Aminogruppe ausgewählt ist;
(3) ein Härtungskatalysator; und
(4) ein Lösungsmittel;
wobei das Siliconharz als Komponente (1) und das Vinylcopolymer als Komponente (2) in Bezug auf Feststoffe in solchen Mengen vorhanden sind, dass das Verhältnis von (1)/(2) von 10/90 bis 50/50, bezogen auf das Gewicht, beträgt.

2. Zusammensetzung nach Anspruch 1, wobei in dem Siliconharz als Komponente (1) das Verhältnis (1-1)/[(1-2) + (1-3)] in Bezug auf Mol-% von Silicium von 30/70 bis 0/100 beträgt.

3. Zusammensetzung nach Anspruch 1 oder 2, wobei die Formel (1-1) so angegeben ist, dass R¹ eine Methylgruppe oder eine einwertige Kohlenwasserstoffgruppe ist, die mit einer UV-absorbierenden Gruppe substituiert ist, m = 1, n = 0 ist, und R³ eine Methylgruppe ist; die Formel (1-2) so angegeben ist, dass R⁸ eine unsubstituierte oder substituierte Alkylengruppe mit 2 bis 8 Kohlenstoffatomen ist, p und q jeweils 0 sind, R⁴ und R⁵ jeweils eine Methylgruppe sind; und die Formel (1-3) so angegeben ist, dass X ein Isocyanuratrest ist, y = 0 ist, R¹⁷ eine Methylgruppe ist und z = 3 ist.

4. Zusammensetzung nach einem der Ansprüche 1 bis 3, wobei das Siliconharz als Komponente (1) durch Hydrolyse und Kondensation aus zumindest einem erhalten wird, das aus der Gruppe bestehend aus den durch die Formeln (1-2) und (1-3) dargestellten Alkoxysilanen und den Kondensaten von Teilhydrolysaten davon ausgewählt ist.

5. Zusammensetzung nach einem der Ansprüche 1 bis 3, wobei das Siliconharz als Komponente (1) durch Hydrolyse und Kondensation von zumindest einem erhalten wird, das aus der Gruppe bestehend aus den durch die Formel (1-3) dargestellten Alkoxysilanen und Teilhydrolysaten davon ausgewählt ist.

6. Zusammensetzung nach einem der Ansprüche 1 bis 5, wobei die Komponente (2) ein Copolymer ist, das durch Copolymerisation aus den folgenden MonomerKomponenten (2-1) bis (2-3) erhalten wird:
(2-1) ein Vinylmonomer mit einer organischen UV-absorbierenden Gruppe: 5 bis 50 Gew.-%;
(2-2) ein reaktive Gruppe enthaltendes Vinylmonomer, das zumindest eines enthält, das aus der Gruppe bestehend aus Alkoxysilylgruppe, Hydroxylgruppe und Epoxygruppe ausgewählt ist: 2 bis 30 Gew.-%; und
(2-3) anderes Monomer, das mit den Monomeren copolymerisierbar ist: 20 bis 93 Gew.-%.

7. Zusammensetzung nach Anspruch 6, wobei die Komponente (2-2) ein eine Hydroxylgruppe enthaltendes Vinylmonomer ist.

8. Zusammensetzung nach einem der Ansprüche 1 bis 7, die weiters Wasser als Komponente (5) umfasst.

9. Zusammensetzung nach einem der Ansprüche 1 bis 8, die weiters anorganische Oxid-Feinteilchen als Komponente (6) umfasst.

10. Zusammensetzung nach Anspruch 9, wobei die Komponente (6) zumindest eine ist, die aus der Gruppe bestehend aus Siliciumdioxid, Zinkoxid, Titanoxid und Ceroxid ausgewählt ist.

11. Zusammensetzung nach einem der Ansprüche 1 bis 10, die weiters ein beliebiges organisches UV-absorbierendes Mittel und/oder einen organischen UV-LichtStabilisator umfasst, das/der nicht Komponente (2) ist.

12. Beschichtetes Fabrikat, das ein organisches Harzsubstrat und einen Hartbeschichtungsfilm umfasst, der direkt auf zumindest einer Oberfläche darauf aus einer Beschichtungszusammensetzung nach einem der Ansprüche 1 bis 11 ausgebildet wurde, wobei das beschichtete Fabrikat die Eigenschaft aufweist, dass es den Adhäsionstest, der ein Adhäsions-Ersttest ist, und einen Adhäsionstest nach Eintauchen in kochendes Wasser, der gemäß ASTM D870 durchgeführt wird, in einem Verhältnis von zumindest 97 % besteht und einen ΔHz- (delta-Trübungs-) Wert in dem Taber-Abrasionstest, der gemäß ASTM D1044 durchgeführt wird, ergibt, der geringer als 15 % ist.

13. Beschichtetes Fabrikat nach Anspruch 12, in dem das organische Harzsubstrat ein Formartikel ist, der aus Polycarbonatharz geformt wurde.

14. Verfahren, das das Beschichten eines organischen Harzsubstrats, wie eines Polycarbonatharzsubstrats, durch Aufbringen einer Beschichtungszusammensetzung nach einem der Ansprüche 1 bis 11 auf einer Oberfläche des organischen Harzsubstrats, vorzugsweise direkt, und Härten der Zusammensetzung umfasst.

15. Verfahren zur Herstellung einer Zusammensetzung nach einem der Ansprüche 1 bis 11, umfassend das Kombinieren der Komponenten (1) und (2) davon, gegebenenfalls umfassend die vorläufige Bildung des Siliconharzes (1) durch die (Co-) Hydrolyse und Kondensation des/der Alkoxysilans/Alkoxysilane.

## Revendications

1. Composition de revêtement, appropriée pour le revêtement de la surface d'un substrat en résine organique, ladite composition comprenant les composants suivants :
(1) une résine de silicone pouvant être obtenue par (co)hydrolyse et condensation d'au moins un élément choisi parmi les alcoxysilanes des formules (1-1), (1-2) et (1-3) suivantes et les condensats d'hydrolysats partiels d'un tel alcoxysilane, à condition que le rapport (1-1)/[(1-2)+(1-3)], en termes de % en moles de silicium, soit compris dans la plage allant de 50/50 à 0/100 :
(R¹)ₘ(R²)ₙSi(OR³)₄₋ₘ₋ₙ (1-1)
où R¹ et R² sont indépendamment un atome d'hydrogène ou un groupe hydrocarboné monovalent non substitué ou substitué, les groupes substituants pouvant être reliés les uns aux autres, R³ est un groupe alkyle ayant de 1 à 3 atomes de carbone, et m et n sont indépendamment 0 ou 1, m+n étant égal à 0, 1 ou 2,
(R⁴O)₃₋ₚ(R⁶)ₚSi-R⁸-Si(R⁷)_{q}(OR⁵)_{3-q} (1-2)
où R⁴ et R⁵ sont indépendamment un groupe alkyle ayant de 1 à 3 atomes de carbone, R⁶ et R⁷ sont indépendamment un atome d'hydrogène ou un groupe hydrocarboné monovalent non substitué ou substitué, R⁸ est un atome d'oxygène, un groupe phénylène ou un groupe alkylène non substitué ou substitué ayant de 2 à 10 atomes de carbone, et p et q sont indépendamment 0 ou 1,
X-[(R¹⁵)Si(R¹⁶)_{y}(OR¹⁷)_{3-y}] (1-3)
où X est un résidu 1,3,5-triméthylcyclotrisiloxane, un résidu 1,3,5,7-tétraméthylcyclotétrasiloxane ou un résidu isocyanurate, R¹⁵ est un groupe alkylène ayant de 1 à 3 atomes de carbone, R¹⁶ est un atome d'hydrogène ou un groupe hydrocarboné monovalent non substitué ou substitué, R¹⁷ est un groupe alkyle ayant de 1 à 3 atomes de carbone, y est 0 ou 1, et z est 3 ou 4 ;
(2) un copolymère vinylique ayant dans sa chaine latérale un groupe organique absorbeur d'ultraviolets et un groupe réactif choisi parmi un groupe alcoxysilyle, un groupe hydroxyle, un groupe époxy, un groupe acide carboxylique et un groupe amino ;
(3) un catalyseur de durcissement ; et
(4) un solvant ;
dans lequel la résine de silicone en tant que composant (1) et le copolymère vinylique en tant que composant (2) sont présents en des quantités en termes de matières solides telles que le rapport (1)/(2) est compris dans la plage allant de 10/90 à 50/50 en poids.

2. Composition telle que définie selon la revendication 1, dans laquelle dans la résine de silicone en tant que composant (1), ledit rapport (1-1)/[(1-2)+(1-3)] est compris dans la plage allant de 30/70 à 0/100 en termes de % en moles de silicium.

3. Composition telle que définie selon la revendication 1 ou 2, dans laquelle la formule (1-1) est spécifiée de telle sorte que R¹ est un groupe méthyle ou un groupe hydrocarboné monovalent substitué par un groupe absorbeur d'ultraviolets, m = 1, n = 0, et R³ est un groupe méthyle ; la formule (1-2) est spécifiée de telle sorte que R⁸ est un groupe alkylène non substitué ou substitué ayant de 2 à 8 atomes de carbone, p et q sont chacun 0, R⁴ et R⁵ sont chacun un groupe méthyle ; et la formule (1-3) est spécifiée de telle sorte que X est un résidu isocyanurate, y = 0, R¹⁷ est un groupe méthyle et z = 3.

4. Composition telle que définie selon l'une quelconque des revendications 1 à 3, dans laquelle la résine de silicone en tant que composant (1) est obtenue par hydrolyse et condensation à partir d'au moins un élément choisi dans le groupe constitué par les alcoxysilanes représentés par les formules (1-2) et (1-3) et les condensats d'hydrolysats partiels de ceux-ci.

5. Composition telle que définie selon l'une quelconque des revendications 1 à 3, dans laquelle la résine de silicone en tant que composant (1) est obtenue par hydrolyse et condensation d'au moins un élément choisi dans le groupe constitué par les alcoxysilanes représentés par la formule (1-3) et les condensats d'hydrolysats partiels de ceux-ci.

6. Composition telle que définie selon l'une quelconque des revendications 1 à 5, dans laquelle le composant (2) est un copolymère obtenu par la copolymérisation des composants monomères (2-1) à (2-3) suivants :
(2-1) un monomère vinylique ayant un groupe absorbeur d'ultraviolets organique : 5 à 50 % en poids ;
(2-2) un monomère vinylique contenant un groupe réactif qui contient au moins un élément choisi dans le groupe constitué par un groupe alcoxysilyle, un groupe hydroxyle et un groupe époxy : 2 à 30 % en poids ; et
(2-3) un autre monomère copolymérisable avec lesdits monomères : 20 à 93 % en poids.

7. Composition telle que définie selon la revendication 6, dans laquelle le composant (2-2) est un monomère vinylique contenant un groupe hydroxyle.

8. Composition telle que définie selon l'une quelconque des revendications 1 à 7, qui comprend en outre de l'eau en tant que composant (5).

9. Composition telle que définie selon l'une quelconque des revendications 1 à 8, qui comprend en outre des particules fines d'oxyde inorganique en tant que composant (6).

10. Composition telle que définie selon la revendication 9, dans laquelle le composant (6) est au moins un composant choisi dans le groupe constitué par la silice, l'oxyde de zinc, l'oxyde de titane et l'oxyde de cérium.

11. Composition telle que définie selon l'une quelconque des revendications 1 à 10, qui comprend en outre n'importe quel agent absorbeur d'ultraviolets organique et/ou stabilisateur de lumière ultraviolette organique autre que le composant (2).

12. Article revêtu comprenant un substrat en résine organique et un film de revêtement dur formé directement sur au moins une surface de celui-ci à partir d'une composition de revêtement telle que définie selon l'une quelconque des revendications 1 à 11, ledit article revêtu ayant la propriété qui est qu'il passe le test d'adhérence après une immersion dans de l'eau bouillante, réalisé conformément à la norme ASTM D870, selon un rapport d'au moins 97 %, et qu'il donne une valeur ΔHz (trouble delta) inférieure à 15 % dans le test d'abrasion de Taber, réalisé conformément à la norme ASTM D1044.

13. Article revêtu tel que défini selon la revendication 12, dans lequel le substrat en résine organique est un substrat moulé formé à partir de résine de polycarbonate.

14. Procédé comprenant le revêtement d'un substrat en résine organique, tel qu'un substrat en résine de polycarbonate, en appliquant une composition de revêtement telle que définie selon l'une quelconque des revendications 1 à 11 sur une surface du substrat en résine organique, de préférence de manière directe, et en durcissant la composition.

15. Procédé de préparation d'une composition telle que définie selon l'une quelconque des revendications 1 à 11, comprenant la combinaison desdits composants (1) et (2), comprenant facultativement la formation préliminaire de la résine de silicone (1) par ladite (co)hydrolyse et condensation dudit ou desdits alcoxysilanes.
